# EUROPEAN PATENT APPLICATION

(11) **EP 3 879 880 A1**
(43) Date of publication of application: **15.09.2021**
(21) Application number: 19883085.3
(22) Date of filing: 15.10.2019
(51) Int. Cl.: H04W 36/00

(54) **CELL SWITCHING METHOD, TERMINAL AND COMMUNICATION NODE**

(30) Priority: 09.11.2018 CN 201811334502
(71) Applicant: VIVO MOBILE COMMUNICATION CO., LTD., Dongguan, Guangdong 523860 (CN)
(72) Inventor: MA, Yue, Dongguan, Guangdong 523860 (CN)
(74) Representative: Lavoix
(86) International application number: PCT/CN2019/111195
(87) International publication number: WO 2020/093842

(57) **Abstract**

Provided by some embodiments of the present disclosure are a cell switching method, a terminal and a communication node, the method comprising: receiving a switching instruction sent by a source node, the switching instruction comprising a first dual connection configuration; establishing a connection to a target node according to the first dual connection configuration; receiving a single connection configuration sent by the target node; applying the single connection configuration; and severing the connection to the source node.

## Description

### CROSS-REFERENCE TO RELATED APPLICATIONS

This application claims priority to Chinese Patent Application No. 201811334502.2, filed on November 9, 2018 in China, which is incorporated herein by reference in its entirety.

### TECHNICAL FIELD

The present disclosure relates to the field of communication technologies, and in particular, to a cell handover method, a terminal, and a communication node.

### BACKGROUND

In a communications system, a terminal usually performs a cell handover, to be specific, a handover from a source node to a target node. In the current communications system, in a cell handover process of the terminal, the terminal severs a connection to the source node based on a handover command sent by the source node, and then initiates access to the target node to connect to the target node. In other words, there is an interruption delay in the terminal during the handover process in the related art, thereby resulting in a relatively large communication delay of the terminal.

### SUMMARY

Some embodiments of the present disclosure provide a cell handover method, a terminal, and a communication node, to resolve a problem of a relatively large communication delay of a terminal.

According to a first aspect, some embodiments of the present disclosure provide a cell handover method, applied to a terminal and including:
receiving a handover command sent by a source node, where the handover command includes a first dual connectivity configuration;
establishing a connection to a target node based on the first dual connectivity configuration;
receiving a single connectivity configuration sent by the target node;
applying the single connectivity configuration; and
severing a connection to the source node.

According to a second aspect, some embodiments of the present disclosure provide a cell handover method, applied to a terminal and including:
receiving a handover command sent by a source node, where the handover command includes a dual connectivity configuration, and a single connectivity configuration of a target node;
establishing a connection to the target node based on the dual connectivity configuration;
applying the single connectivity configuration of the target node; and
severing a connection to the source node.

According to a third aspect, some embodiments of the present disclosure provide a cell handover method, applied to a target node and including:
receiving a handover request sent by a source node;
sending a handover response of the handover request to the source node, where the handover response includes a handover command, and the handover command includes a first dual connectivity configuration;
establishing a connection to a terminal; and
sending a single connectivity configuration to the terminal.

According to a fourth aspect, some embodiments of the present disclosure provide a cell handover method, applied to a source node and including:
sending a handover request to a target node;
receiving a handover response that is of the handover request and that is sent by the target node, where the handover response includes a handover command, and the handover command includes a first dual connectivity configuration;
sending the handover command to a terminal; and
severing a connection to the terminal, where the severing is performed after the terminal establishes the connection to the target node.

According to a fifth aspect, some embodiments of the present disclosure provide a terminal, including:
a first receiving module, configured to receive a handover command sent by a source node, where the handover command includes a first dual connectivity configuration;
an establishing module, configured to establish a connection to a target node based on the first dual connectivity configuration;
a second receiving module, configured to receive a single connectivity configuration sent by the target node;
an applying module, configured to apply the single connectivity configuration; and
a severing module, configured to sever a connection to the source node.

According to a sixth aspect, some embodiments of the present disclosure provide a terminal, including:
a receiving module, configured to receive a handover command sent by a source node, where the handover command includes a dual connectivity configuration, and a single connectivity configuration of a target node;
an establishing module, configured to establish a connection to the target node based on the dual connectivity configuration;
an applying module, configured to apply the single connectivity configuration of the target node; and
a severing module, configured to sever a connection to the source node.

According to a seventh aspect, some embodiments of the present disclosure provide a communication node, where the communication node is a target node and includes:
a first receiving module, configured to receive a handover request sent by a source node;
a first sending module, configured to send a handover response of the handover request to the source node, where the handover response includes a handover command, and the handover command includes a first dual connectivity configuration;
an establishing module, configured to establish a connection to a terminal; and
a second sending module, configured to send a single connectivity configuration to the terminal.

According to an eighth aspect, some embodiments of the present disclosure provide a communication node, where the communication node is a source node and includes:
a first sending module, configured to send a handover request to a target node;
a first receiving module, configured to receive a handover response that is of the handover request and that is sent by the target node, where the handover response includes a handover command, and the handover command includes a first dual connectivity configuration;
a second sending module, configured to send the handover command to a terminal; and
a severing module, configured to sever a connection to the terminal, where the severing is performed after the terminal establishes the connection to the target node.

According to a ninth aspect, some embodiments of the present disclosure provide a terminal, including a memory, a processor, and a program that is stored in the memory and executable on the processor, where when the processor executes the program, steps of the cell handover method provided in the first aspect of some embodiments of the present disclosure are implemented.

According to a tenth aspect, some embodiments of the present disclosure provide a terminal, including a memory, a processor, and a program that is stored in the memory and executable on the processor, where when the processor executes the program, steps of the cell handover method provided in the second aspect of some embodiments of the present disclosure are implemented.

According to an eleventh aspect, some embodiments of the present disclosure provide a communication node, where the communication node is a target node and includes a memory, a processor, and a program that is stored in the memory and executable on the processor, where when the processor executes the program, steps of the cell handover method provided in the third aspect of some embodiments of the present disclosure are implemented.

According to a twelfth aspect, some embodiments of the present disclosure provide a communication node, where the communication node is a source node and includes a memory, a processor, and a program that is stored in the memory and executable on the processor, where when the processor executes the program, steps of the cell handover method provided in the fourth aspect of some embodiments of the present disclosure are implemented.

According to a twelfth aspect, some embodiments of the present disclosure provide a computer-readable storage medium, where the computer-readable storage medium stores a computer program, and when a processor executes the computer program, steps of the cell handover method provided in the first aspect of some embodiments of the present disclosure are implemented, or when a processor executes the computer program, steps of the cell handover method provided in the second aspect of some embodiments of the present disclosure are implemented, or when a processor executes the computer program, steps of the cell handover method provided in the third aspect of some embodiments of the present disclosure are implemented, or when a processor executes the computer program, steps of the cell handover method provided in the fourth aspect of some embodiments of the present disclosure are implemented.

In some embodiments of the present disclosure, the handover command sent by the source node is received, where the handover command includes the first dual connectivity configuration; the connection to the target node is established based on the first dual connectivity configuration; the single connectivity configuration sent by the target node is received; the single connectivity configuration is applied; and the connection to the source node is severed. In this way, the terminal can establish the connection to the target node and maintain the connection to the source node during a handover, thereby reducing a communication delay of the terminal.

### BRIEF DESCRIPTION OF DRAWINGS

FIG. 1 is a structural diagram of a network system applicable to some embodiments of the present disclosure;
FIG. 2 is a flowchart of a cell handover method according to some embodiments of the present disclosure;
FIG. 3 is a flowchart of another cell handover method according to some embodiments of the present disclosure;
FIG. 4 is a flowchart of another cell handover method according to some embodiments of the present disclosure;
FIG. 5 is a flowchart of another cell handover method according to some embodiments of the present disclosure;
FIG. 6 is a schematic diagram of another cell handover method according to some embodiments of the present disclosure;
FIG. 7 is a schematic diagram of another cell handover method according to some embodiments of the present disclosure;
FIG. 8 is a structural diagram of a terminal according to some embodiments of the present disclosure;
FIG. 9 is a structural diagram of another terminal according to some embodiments of the present disclosure;
FIG. 10 is a structural diagram of another terminal according to some embodiments of the present disclosure;
FIG. 11 is a structural diagram of another terminal according to some embodiments of the present disclosure;
FIG. 12 is a structural diagram of another terminal according to some embodiments of the present disclosure;
FIG. 13 is a structural diagram of another terminal according to some embodiments of the present disclosure;
FIG. 14 is a structural diagram of a communications device according to some embodiments of the present disclosure;
FIG. 15 is a structural diagram of another communications device according to some embodiments of the present disclosure;
FIG. 16 is a structural diagram of another communications device according to some embodiments of the present disclosure;
FIG. 17 is a structural diagram of another communications device according to some embodiments of the present disclosure;
FIG. 18 is a structural diagram of another communications device according to some embodiments of the present disclosure;
FIG. 19 is a structural diagram of another communications device according to some embodiments of the present disclosure;
FIG. 20 is a structural diagram of another communications device according to some embodiments of the present disclosure;
FIG. 21 is a structural diagram of another communications device according to some embodiments of the present disclosure;
FIG. 22 is a structural diagram of another communications device according to some embodiments of the present disclosure;
FIG. 23 is a structural diagram of another communications device according to some embodiments of the present disclosure;
FIG. 24 is a structural diagram of another terminal according to some embodiments of the present disclosure;
FIG. 25 is a structural diagram of another communications device according to some embodiments of the present disclosure; and
FIG. 26 is a structural diagram of another communications device according to some embodiments of the present disclosure.

### DESCRIPTION OF EMBODIMENTS

The following clearly and completely describes the technical solutions in some embodiments of the present disclosure with reference to the accompanying drawings in some embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

The term "include" and any other variants in the specification and claims of this application mean to cover the non-exclusive inclusion, for example, a process, method, system, product, or device that includes a list of steps or units is not necessarily limited to those steps or units, but may include other steps or units not expressly listed or inherent to such a process, method, product, or device. In addition, in the specification and claims, "and/or" is used to indicate at least one of connected objects. For example, A and/or B represents the following three cases: Only A is included, only B is included, and both A and B exist.

In some embodiments of the present disclosure, the word such as "example" or "for example" is used to represent giving an example, an illustration, or a description. Any embodiment or design scheme described as "example" or "for example" in some embodiments of the present disclosure should not be explained as being more preferred or having more advantages than another embodiment or design scheme. Exactly, use of the term "example" is intended to present a concept in a specific manner.

The embodiments of the present disclosure are described below with reference to the accompanying drawings. A cell handover method, a terminal, and a communication node provided in some embodiments of the present disclosure may be applied to a wireless communications system. The wireless communications system may be a 5G system, or an evolved long term evolution (evolved long term evolution, eLTE) system, or a subsequent evolved communications system.

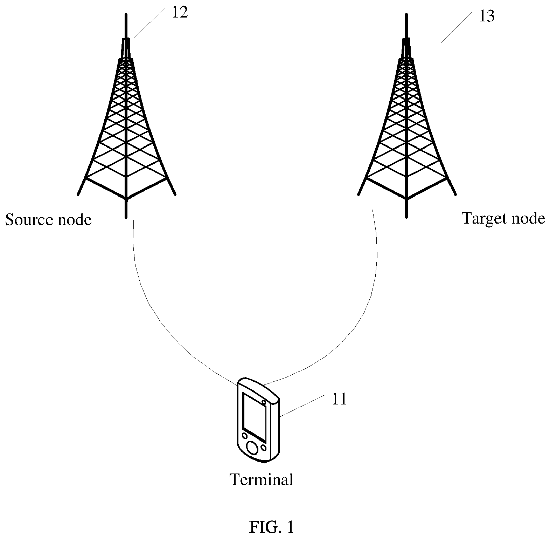

Referring to FIG. 1, FIG. 1 is a structural diagram of a network system applicable to some embodiments of the present disclosure. As shown in FIG. 1, the network system includes a terminal 11, a source node 12, and a target node 13. The terminal 11 may be user equipment (User Equipment, UE) or another terminal side device, for example, a terminal side device such as a mobile phone, a tablet personal computer (Tablet Personal Computer), a laptop computer (Laptop Computer), a personal digital assistant (personal digital assistant, PDA), a mobile internet device (Mobile Internet Device, MID), or a wearable device (Wearable Device). It should be noted that a specific type of the terminal 11 is not limited in some embodiments of the present disclosure. The source node 12 and the target node 13 may be: a source base station and a target base station in a handover process; or a source secondary node (secondary node, SN) and a target SN in dual connectivity (Dual Connectivity, DC); or a source master node (Master Node, MN) and a target SN in DC. In addition, in an SCG change (change) process, the source node 12 may be a source MN and/or a source SN, and the target node may be a target SN. It should be noted that a DC dual connectivity configuration in the present disclosure is a configuration in which the source node and the target node simultaneously sever the terminal (simultaneous reception/sending between two nodes and the terminal), and a single connectivity (Single Connectivity, SC) configuration in the present disclosure is a configuration in which the target node separately severs the terminal.

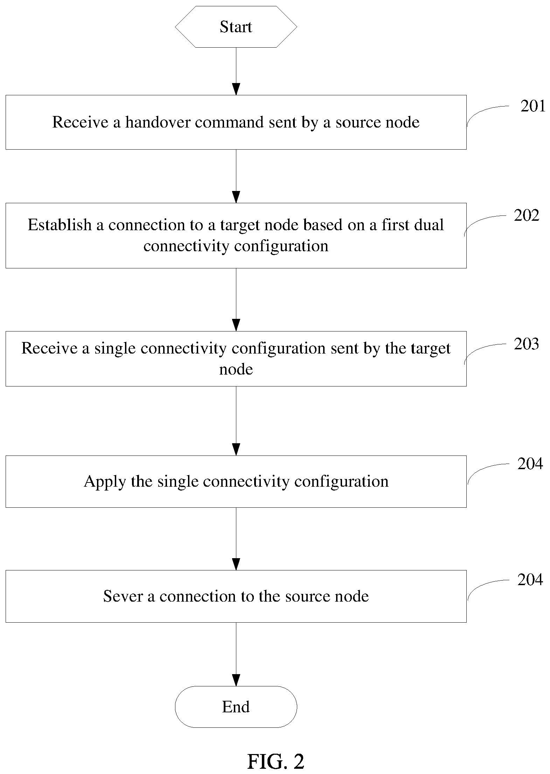

Referring to FIG. 2, FIG. 2 is a flowchart of a cell handover method according to some embodiments of the present disclosure. The method is applied to a terminal. As shown in FIG. 2, the method includes the following steps.

Step 201: Receive a handover command sent by a source node, where the handover command includes a first dual connectivity configuration.

The handover command (HO command) may be a configuration message, such as a reconfiguration message. Further, the handover command may be a radio resource control reconfiguration message (RRC Reconfiguration). In other words, in some embodiments of the present disclosure, the handover command may also be referred to as a configuration message or a reconfiguration message.

The first dual connectivity configuration may be a dual connectivity configuration between the target node and the source node, that is, the dual connectivity configuration includes related configurations for establishing dual connectivity between the terminal, and the target node and the source node, for example, a physical layer configuration, a layer 2 configuration, and a layer 3 configuration.

Step 202: Establish a connection to a target node based on the first dual connectivity configuration.

This step may be to use a configuration of the target node in the dual connectivity configuration to establish the connection to the target node. For example, at least one of the physical layer configuration, the layer 2 configuration, and the layer 3 configuration of the target node in the dual connectivity configuration is used to establish the connection to the target node.

It should be noted that when establishing the connection to the target node based on the first dual connectivity configuration, the terminal still maintains a connection to the source cell. That is, after the connection to the target node is established based on the first dual connectivity configuration, dual connectivity is formed between the terminal, and the source node and the target node, or the first dual connectivity configuration is applied to implement corresponding dual connectivity.

Step 203: Receive a single connectivity configuration sent by the target node.

The single connectivity configuration may be sent by using a configuration message such as an RRC reconfiguration message. The single connectivity configuration may include a single connectivity configuration between the terminal and the target node, for example, a physical layer configuration, a layer 2 configuration, and a layer 3 configuration of the single connectivity. In addition, the single connectivity may be single connectivity between the terminal and a target cell (Target Cell) in the target node, and the single connectivity configuration may be a configuration of the target cell, such as a physical layer configuration, a layer 2 configuration, and a layer 3 configuration.

It should be noted that in some embodiments of the present disclosure, the dual connectivity configuration may also be referred to as dual connectivity configuration information, and the single connectivity configuration may also be referred to as single connectivity configuration information.

Step 204: Apply the single connectivity configuration.

The application of the single connectivity configuration may be to apply the single connectivity configuration to a corresponding entity or perform a corresponding configuration operation. For example, the physical layer configuration, the layer 2 configuration, and the layer 3 configuration in the single connectivity configuration are applied to a physical layer, a layer 2, and a layer 3, respectively.

Step 205: Sever a connection to the source node.

The connection to the source node may be severed after the terminal applies the single connectivity configuration. Certainly, this is not limited. For example, the connection to the source node may be severed when the single connectivity configuration is applied.

Through the above steps, the terminal can establish the connection to the target node, and maintain the connection to the source node. That is, the terminal is connected to the source node and the target node at the same time during a handover process, and may send and receive data to ensure that data receiving and sending is not interrupted. In this way, an interruption delay of 0 ms in a moving process is implemented, and an effect of reducing a communication delay of the terminal is achieved.

In an optional implementation, after the receiving a handover command sent by a source node, the method further includes:
sending a first confirmation message to the source node, where the first confirmation message includes at least one of the following:
confirmation information of the handover command; and
confirmation information of the first dual connectivity configuration.

The confirmation information of the handover command may indicate whether the terminal successfully receives the handover command. In addition, because the handover command may be a reconfiguration message, the confirmation information of the handover command may also be referred to as confirmation information of the reconfiguration message.

The confirmation information of the first dual connectivity configuration may indicate whether the terminal successfully parses the first dual connectivity configuration.

In this implementation, because at least one piece of the confirmation information of the handover command and the confirmation information of the first dual connectivity configuration is used, accuracy of reporting a confirmation message by the terminal can be improved.

In an optional implementation, the handover command is transmitted through a signaling radio bearer (Signaling Radio Bearers, SRB) 1 or an SRB2. It should be noted that in a process in which the source node and the target node sever the terminal at the same time, an SRBX of the source node and an SRBY of the target node may exist at the same time, or only one of the SRBX and the SRBY exists at a specified moment.

The SRB1 and the SRB2 may be an SRB1 and an SRB2 defined in a protocol. For example, the SRB 1 may be used to transmit an RRC message on a logical channel such as a dedicated control channel (Dedicated Control Channel, DCCH), and the SRB2 may be used to transmit a non-access stratum (Non-access stratum, NAS) message on a logical channel such as a DCCH.

In this implementation, because the handover command may be transmitted by using the SRB 1 or the SRB2, flexibility of transmitting the handover command can be improved.

In an optional implementation, the single connectivity configuration is transmitted through an SRB 1 or an SRB2 or an SRB3.

The SRB3 may be an SRB3 newly defined in a 5G protocol, and the SRB may be transmission in dual connectivity combined by a long term evolution (Long Term Evolution, LTE) system and a new radio (New Radio, NR) system.

In this implementation, because the target node can transmit the single connectivity configuration to the terminal by using the SRB1 or the SRB2 or the SRB3, flexibility of transmitting the single connectivity configuration can be improved.

In an optional implementation, before the applying the single connectivity configuration and severing a connection to the source node, the method further includes:
sending a first notification message to the source node, where the first notification message is used to indicate that the first dual connectivity configuration or the single connectivity configuration has taken effect or used to instruct to release a dual connectivity resource reserved by the source node.

That the first dual connectivity configuration takes effect may be that the terminal receives the configuration or the configuration is applied, and that the single connectivity configuration takes effect may be that the terminal receives the configuration or the configuration is applied.

In this way, the first notification message can enable the source node to release, in time, the dual connectivity resource reserved by the source node, to save resources.

In an optional implementation, after the establishing a connection to a target node, the method further includes:
receiving a second dual connectivity configuration sent by the target node; and
performing at least one of conversion of a bearer type, conversion of an anchor node, and conversion of a key based on the second dual connectivity configuration.

The second dual connectivity configuration may be delivered by the target node together with the single connectivity configuration. For example, the single connectivity configuration and the second dual connectivity configuration are delivered to the terminal by using a reconfiguration message. Certainly, this is not limited. For example, the target node may deliver the single connectivity configuration and the second dual connectivity configuration to the terminal by using different reconfiguration messages.

In addition, the second dual connectivity configuration may be a dual connectivity configuration between the target node and another node.

In this implementation, the conversion of the bearer type, the conversion of the anchor node, and the conversion of the key are performed by using the second dual connectivity configuration, to improve communication performance of the terminal.

In an optional implementation, after the receiving a single connectivity configuration sent by the target node, the method further includes:
sending a second confirmation message to the target node, where the second confirmation message includes at least one of the following:
confirmation information of the single connectivity configuration; and
confirmation information of end of a cell handover procedure.

The confirmation information of the single connectivity configuration may indicate that the single connectivity configuration is applied or takes effect, and the confirmation information of the end of the cell handover procedure may indicate that the cell handover procedure ends. Therefore, the second confirmation message is used to notify the target node of a current status of the terminal in a timely manner, to improve working efficiency of the target node.

Further, after receiving the second confirmation message, the target node may send a second notification message to the source node, to indicate that the single connectivity configuration has taken effect or used to instruct to release a dual connectivity resource reserved by the source node, so that the source node releases, in a timely manner, the dual connectivity resource reserved by the source node, so as to save resources.

In an optional implementation, the applying the single connectivity configuration includes:
applying the single connectivity configuration by default based on a preset condition; or
applying the single connectivity configuration based on a received network instruction or reconfiguration message.

The preset condition may be a preset time point or another condition, and the preset condition may be predefined by the terminal, preconfigured by the network, or the like. Because the single connectivity configuration is applied by default based on the preset condition, flexibility of applying the single connectivity configuration is improved, to adapt to requirements of different services or different scenarios.

The network instruction may be an instruction sent by the source node or an instruction sent by the target node. Similarly, the reporting, to the network, an indication indicating that the single connectivity configuration takes effect may be reporting, to the source node or the target node, the indication indicating that the single connectivity configuration takes effect.

In addition, the reconfiguration message may be a configuration message used to transmit the foregoing single connectivity configuration, or the reconfiguration message may be another configuration message sent by the source node or the target node.

Because the single connectivity configuration may be applied based on the network instruction or the reconfiguration message, flexibility of applying the single connectivity configuration can be improved, to adapt to the requirements of different services or different scenarios. In addition, the indication indicating that the single connectivity configuration takes effect can also be reported to the network, so that the source node or the target node can confirm a status of the terminal in time.

In some embodiments of the present disclosure, the handover command sent by the source node is received, where the handover command includes the first dual connectivity configuration; the connection to the target node is established based on the first dual connectivity configuration; the single connectivity configuration sent by the target node is received; the single connectivity configuration is applied; and the connection to the source node is severed. In this way, the terminal can establish the connection to the target node and maintain the connection to the source node during a handover, thereby reducing a communication delay of the terminal.

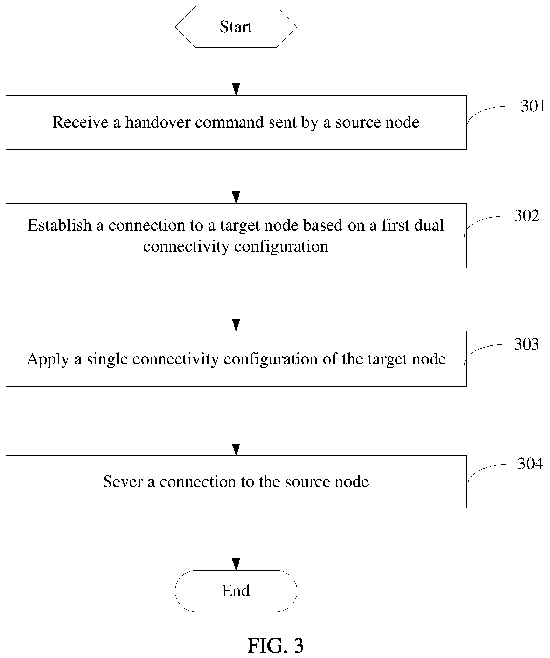

Referring to FIG. 3, FIG. 3 is a flowchart of another cell handover method according to some embodiments of the present disclosure. The method is applied to a terminal. As shown in FIG. 3, the method includes the following steps.
Step 301: Receive a handover command sent by a source node, where the handover command includes a dual connectivity configuration, and a single connectivity configuration of a target node.
Step 302: Establish a connection to the target node based on the dual connectivity configuration.
Step 303: Apply the single connectivity configuration of the target node.
Step 304: Sever a connection to the source node.

For the dual connectivity configuration and single connectivity configuration, refer to the first dual connectivity configuration and the single connectivity configuration in the embodiment shown in FIG. 2. Details are not described herein again.

In addition, for the establishment of the connection to the target node and the application of the single connectivity configuration of the target node, refer to the corresponding descriptions of the embodiment shown in FIG. 2. Details are not described herein again.

Optionally, the applying a single connectivity configuration of the target node includes:
applying the single connectivity configuration of the target node if access of the target node is completed; or
applying the single connectivity configuration of the target node by default based on a preset condition; or
applying the single connectivity configuration of the target node based on a received network instruction or reconfiguration message, and reporting, to a network, an indication indicating that the single connectivity configuration of the target node takes effect.

For the application of the single connectivity, refer to the corresponding descriptions of the embodiment shown in FIG. 2. Details are not described herein again. A same beneficial effect is achieved. In addition, the indication that is reported to the network and that indicates that the single connectivity configuration of the target node takes effect may be an indication that is reported to the source node or the target node and that indicates that the single connectivity configuration takes effect.

In this embodiment, through the above steps, the terminal can establish the connection to the target node, and maintain the connection to the source node. That is, the terminal is connected to the source node and the target node at the same time during a handover process, and may send and receive data to ensure that data receiving and sending is not interrupted. In this way, an interruption delay of 0 ms in a moving process is implemented, and an effect of reducing a communication delay of the terminal is achieved.

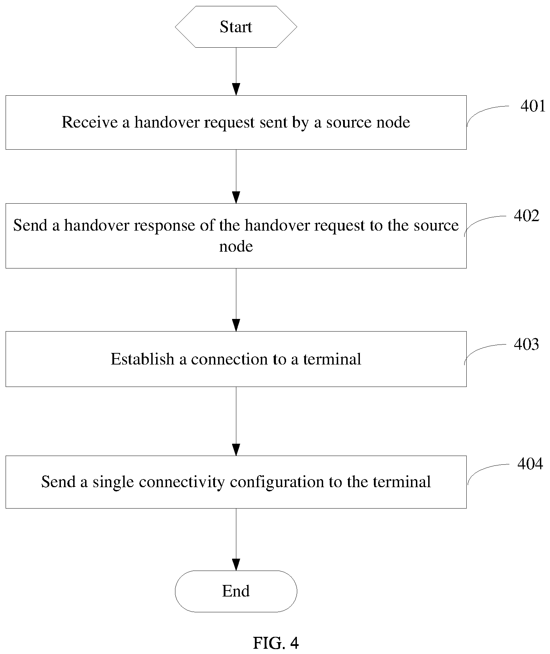

Referring to FIG. 4, FIG. 4 is a flowchart of another cell handover method according to some embodiments of the present disclosure. The method is applied to a target node. As shown in FIG. 4, the method includes the following steps.
Step 401: Receive a handover request sent by a source node.
Step 402: Send a handover response of the handover request to the source node, where the handover response includes a handover command, and the handover command includes a first dual connectivity configuration.
Step 403: Establish a connection to a terminal.
Step 404: Send a single connectivity configuration to the terminal.

Optionally, the handover command further includes terminal capability split information, and the establishing a connection to a terminal is performed when the source node accepts the handover command, where
if the source node rejects the handover command, the target node receives a notification message that is sent by the source node and that is used to indicate rejection of the handover command.

The terminal capability may be split, for example, a part of the terminal capability is split to correspond to the target node, and the other part is split to correspond to the source node. The source node may confirm, based on the terminal capability split information, whether to accept the handover command. In addition, when the source node rejects the handover command, the terminal may fall back to a conventional cell handover mode.

Optionally, after the sending a handover response of the handover request to the source node, the method further includes:
receiving a third confirmation message sent by the source node, where the third confirmation message includes at least one of the following:
confirmation information of the handover command; and
confirmation information of the first dual connectivity configuration.

Optionally, the single connectivity configuration is transmitted through an SRB1 or an SRB2 or an SRB3.

Optionally, after the sending a single connectivity configuration to the terminal or after an indication indicating that the single connectivity configuration of the terminal takes effect, the method further includes:
sending a second notification message to the source node, where the second notification message is used to indicate that the single connectivity configuration has taken effect or used to instruct to release a dual connectivity resource reserved by the source node.

Optionally, after the establishing a connection to a terminal, the method further includes:
sending a second dual connectivity configuration to the terminal.

Optionally, after the sending a single connectivity configuration to the terminal, the method further includes:
receiving a second confirmation message sent by the terminal, where the second confirmation message includes at least one of the following:
confirmation information of the single connectivity configuration;
and confirmation information of end of a cell handover procedure.

It should be noted that this embodiment is used as an implementation of the target node corresponding to the embodiment shown in FIG. 2. For a specific implementation of this embodiment, refer to the related descriptions of the embodiment shown in FIG. 2. To avoid repeated descriptions, details are not described again in this embodiment. A same beneficial effect can also be achieved.

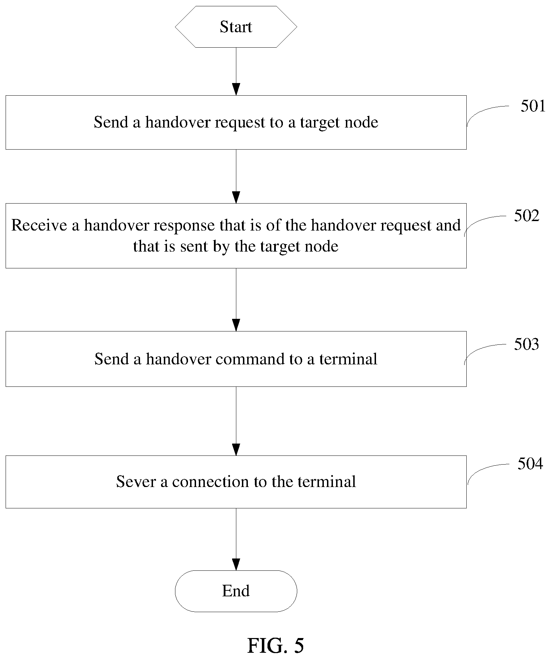

Referring to FIG. 5, FIG. 5 is a flowchart of another cell handover method according to some embodiments of the present disclosure. The method is applied to a source node. As shown in FIG. 5, the method includes the following steps.
Step 501: Send a handover request to a target node.
Step 502: Receive a handover response that is of the handover request and that is sent by the target node, where the handover response includes a handover command, and the handover command includes a first dual connectivity configuration.
Step 503: Send the handover command to a terminal.
Step 504: Sever a connection to the terminal, where the severing is performed after the terminal establishes the connection to the target node.

Optionally, the handover command further includes terminal capability split information, and the sending the handover command to a terminal includes:
sending the handover command to the terminal if the source node accepts the handover command, where
if the handover command is rejected, the source node sends, to the target node, a notification message that is used to indicate rejection of the handover command.

Optionally, after a configuration message is sent to the terminal, the method further includes:
receiving a first confirmation message sent by the terminal, where the first confirmation message includes at least one of the following:
confirmation information of the handover command; and
confirmation information of the first dual connectivity configuration.

Optionally, after the receiving a first confirmation message sent by the terminal, the method further includes:
sending a third confirmation message to the target node, where the third confirmation message includes at least one of the following:
confirmation information of the handover command; and
confirmation information of the first dual connectivity configuration.

Optionally, the handover command is transmitted through an SRB1 or an SRB2.

Optionally, after a configuration message is sent to the terminal, the method further includes:
receiving a first notification message sent by the terminal, where the first notification message is used to indicate that the first dual connectivity configuration or the single connectivity configuration has taken effect or used to instruct to release a dual connectivity resource reserved by the source node; and/or
receiving a second notification message sent by the target node, where the second notification message is used to indicate that the single connectivity configuration has taken effect or used to instruct to release a dual connectivity resource reserved by the source node.

Optionally, after the first notification message and/or the second notification message are/is received, the method further includes:
releasing the dual connectivity resource reserved by the source node.

It should be noted that this embodiment is used as an implementation of the source node corresponding to the embodiment shown in FIG. 2. For a specific implementation of this embodiment, refer to the related descriptions of the embodiment shown in FIG. 2. To avoid repeated descriptions, details are not described again in this embodiment. A same beneficial effect can also be achieved.

According to the foregoing described embodiment, a dual connectivity configuration message can be sent by the source node to the terminal on a network side. After the terminal completes a dual connectivity configuration, the target node configures a single connectivity for the terminal.

For the DC configuration message, the handover command (in the reconfiguration message) delivered by the source node to the terminal includes the dual connectivity configuration may be configured by using the SRB 1/SRB2, and may include two connectivity related configurations.

In addition, after receiving the handover command, the source node may accept the dual connectivity configuration command and apply the dual connectivity configuration command, or reject the dual connectivity configuration command, and notify the target node to fall back to a conventional handover.

For the terminal's confirmation of dual connectivity reconfiguration signaling, the terminal may confirm the following for the network after receiving the handover command:
the reconfiguration message itself (including a dual connectivity or single connectivity reconfiguration message);
the handover command;
a DC configuration in the message; and
any combination of the above.

After receiving the confirmation message, the source node informs the target node that the handover command is successfully delivered/the dual connectivity configuration takes effect.

For a single connectivity configuration message of the target cell, after accessing the target cell, the target node configures a single cell configuration for the terminal and breaks dual connectivity. The configuration may be performed by using an SRB1/2/3. Before disconnection, the terminal/the target cell may notify the source node that the dual connectivity configuration has been completed.

The terminal may initiate a confirmation complete message to the target node to complete the handover process. The confirmation message includes confirmation of application of the single connectivity and confirmation of end of the procedure.

After receiving the confirmation message, the target node informs the source node that the single connectivity configuration takes effect and the original dual connectivity configuration may be deleted.

In addition, it should be noted that the cell handover method provided in some embodiments of the present disclosure can be used for any cell change process, such as a handover (handover) or a secondary cell change. The secondary cell change may be an SN change (SN change), a primary secondary cell (Primary Secondary Cell, PSCell) change, a secondary cell (Secondary Cell, Scell) change. Certainly, the cell handover method can also be used for negotiation of a cell change in an intra-standard system, and can also be used for UE capability negotiation of a simultaneous change a plurality of cells, and the like.

According to the method provided in some embodiments of the present disclosure, in a dual connectivity handover, the terminal can use different configurations to complete the entire procedure, and introduce confirmation and inter-network notification at an appropriate time.

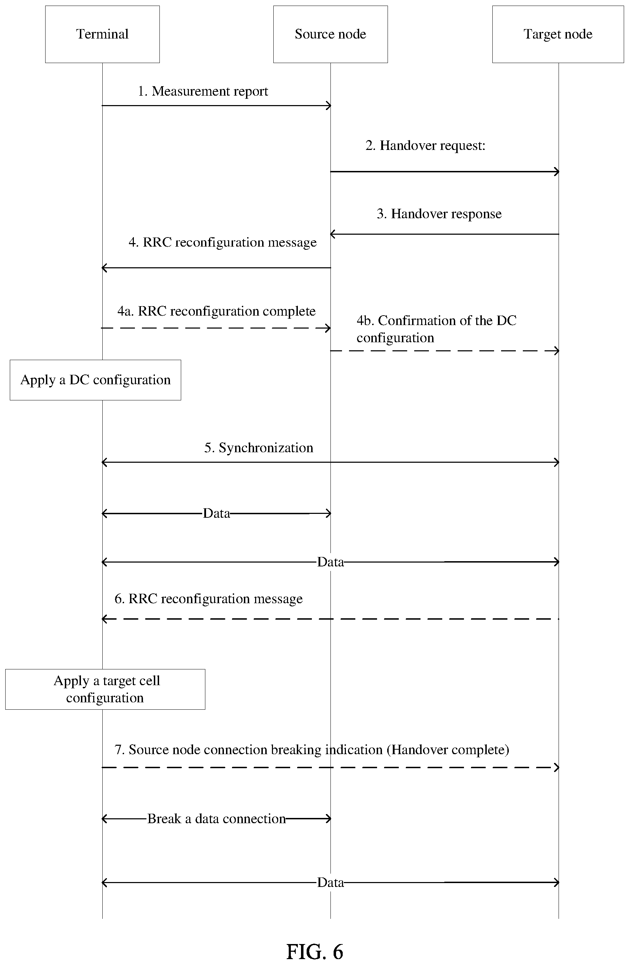

Referring to FIG. 6, a cell handover method provided in some embodiments of the present disclosure is described below by using an example. As shown in FIG. 6, the method includes the following steps.
Step 1: A terminal reports a measurement report (Measurement Report) to a source node.
Step 2: The source node sends a handover request (HO Request) to a target node.
Step 3: The target node sends a handover response (HO Response) to the source node.
Step 4: The source node sends an RRC reconfiguration message to the terminal, where the RRC reconfiguration message is a handover command (HO command).
Step 4a: The terminal sends an RRC reconfiguration complete message (RRC Reconfiguration Complete) to the source node.
Step 4b: The source node sends a confirmation message of a DC configuration (Confirmation of configuration) to the target node.

It should be noted that, because the above handover command includes the DC configuration, after step 4 is performed, the terminal applies the DC configuration (Apply DC configuration).

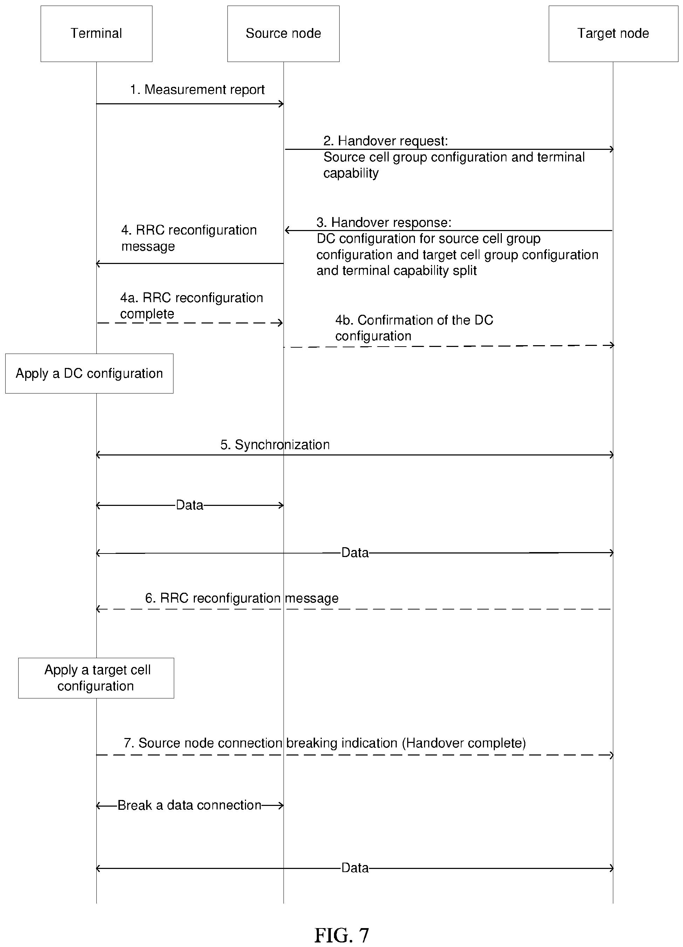

It should be noted that step 4a and step 4b may be performed after step 4 and before the DC configuration is applied. For example, as shown in FIG. 6 and FIG. 7, the RRC reconfiguration complete message may be used to confirm an RRC reconfiguration message, that is, confirm whether the terminal successfully receives the RRC reconfiguration complete message, and the confirmation message of the DC configuration may be used to confirm validity of the DC configuration, that is, it is considered that the DC configuration is executable for the terminal.

Alternatively, step 4a and step 4b may be sent after the DC configuration is applied. The RRC reconfiguration complete message may be used to confirm an RRC reconfiguration message. Certainly, the confirmation message of the DC configuration may be further used to confirm validity of the DC configuration, or may be used to confirm the DC configuration that has been applied.

Step 5: The terminal performs synchronization (Synchronization) with the target node, for example, may initiate a random access process by using a random access channel (Random Access Channel, RACH).

After step 5, the terminal may perform data receiving and sending with the source node, and may further perform data receiving and sending with the target node.

Step 6: The target node sends an RRC reconfiguration message (RRC Reconfiguration Complete) to the terminal, where the RRC reconfiguration message is used to transmit a single connectivity configuration.

The single connectivity configuration may include a target cell configuration. Therefore, after step 6, the terminal may apply the target cell configuration (Apply Target Cell configuration).

Step 7: The terminal sends a source node connection breaking indication (Indication of breaking the source connection (HO complete)) to the target node, that is, indicates that a handover is completed.

Step 8: The terminal breaks a connection to the source node.

Step 9: The terminal transmits data to the target node.

Further, as shown in FIG. 7, the handover request in step 2 may include a source cell group configuration (source-CG (cellgroup) configuration), and may further include terminal capability information (UE capability). The handover response may include a dual connectivity configuration for a source cell group and a target cell group (DC configuration for source-CG and target-CG), and terminal capability split information (UE capability split). The source cell group configuration includes a source cell configuration, and the target cell group configuration includes a target cell configuration. The terminal capability split information may represent a terminal capability of splitting into a source cell group and a target cell group, that is, a terminal capability corresponding to the terminal in the source cell group and the target cell group in dual connectivity may vary.

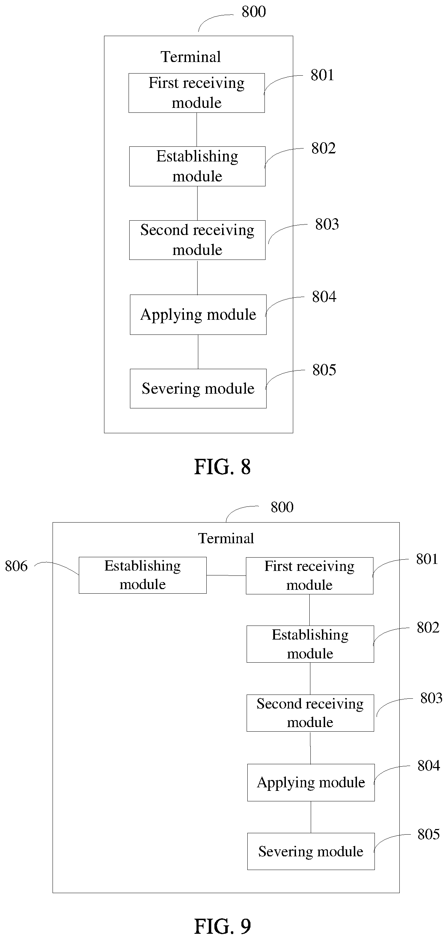

Referring to FIG. 8, FIG. 8 is a structural diagram of a terminal according to some embodiments of the present disclosure. As shown in FIG. 8, a terminal 800 includes:
a first receiving module 801, configured to receive a handover command sent by a source node, where the handover command includes a first dual connectivity configuration;
an establishing module 802, configured to establish a connection to a target node based on the first dual connectivity configuration;
a second receiving module 803, configured to receive a single connectivity configuration sent by the target node;
an applying module 804, configured to apply the single connectivity configuration; and
a severing module 805, configured to sever a connection to the source node.

Optionally, as shown in FIG. 9, the terminal 800 further includes:
a first sending module 806, configured to send a first confirmation message to the source node, where the first confirmation message includes at least one of the following:
confirmation information of the handover command; and
confirmation information of the first dual connectivity configuration.

Optionally, the handover command is transmitted through an SRB1 or an SRB2.

Optionally, the single connectivity configuration is transmitted through an SRB1 or an SRB2 or an SRB3.

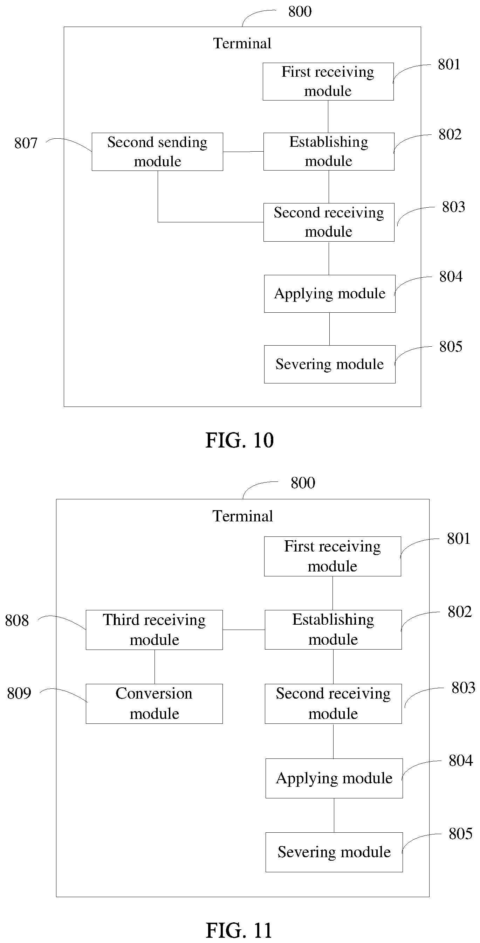

Optionally, as shown in FIG. 10, the terminal 800 further includes:
a second sending module 807, configured to send a first notification message to the source node, where the first notification message is used to indicate that the first dual connectivity configuration or the single connectivity configuration has taken effect or used to instruct to release a dual connectivity resource reserved by the source node.

Optionally, as shown in FIG. 11, the terminal 800 further includes:
a third receiving module 808, configured to receive a second dual connectivity configuration sent by the target node; and
a conversion module 809, configured to perform at least one of conversion of a bearer type, conversion of an anchor node, and conversion of a key based on the second dual connectivity configuration.

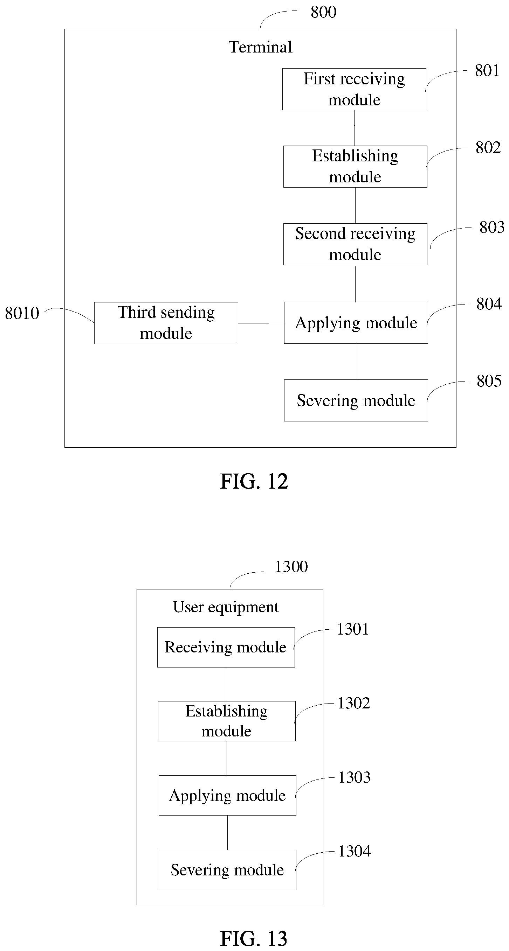

Optionally, as shown in FIG. 12, the terminal 800 further includes: a third sending module 8010, configured to send a second confirmation message to the target node, where the second confirmation message includes at least one of the following:
confirmation information of the single connectivity configuration; and
confirmation information of end of a cell handover procedure.

Optionally, the applying module 804 is configured to apply the single connectivity configuration by default based on a preset condition; or
the applying module 804 is configured to apply the single connectivity configuration based on a received network instruction or reconfiguration message.

The terminal provided in some embodiments of the present disclosure can implement the processes implemented by the terminal in the method embodiment in FIG. 2. To avoid repetition, details are not described herein again. In this way, a communication delay of the terminal can be reduced.

Referring to FIG. 13, FIG. 13 is a structural diagram of another terminal according to some embodiments of the present disclosure. As shown in FIG. 13, a terminal 1300 includes:
a receiving module 1301, configured to receive a handover command sent by a source node, where the handover command includes a dual connectivity configuration, and a single connectivity configuration of a target node;
an establishing module 1302, configured to establish a connection to the target node based on the dual connectivity configuration;
an applying module 1303, configured to apply the single connectivity configuration of the target node; and
a severing module 1304, configured to sever a connection to the source node.

Optionally, the applying module 1303 is configured to apply the single connectivity configuration of the target node if access of the target node is completed; or
the applying module 1303 is configured to apply the single connectivity configuration of the target node by default based on a preset condition; or
the applying module 1303 is configured to apply the single connectivity configuration of the target node based on a received network instruction or reconfiguration message, and reporting, to a network, an indication indicating that the single connectivity configuration of the target node takes effect.

The terminal provided in some embodiments of the present disclosure can implement the processes implemented by the terminal in the method embodiment in FIG. 3. To avoid repetition, details are not described herein again. In this way, a communication delay of the terminal can be reduced.

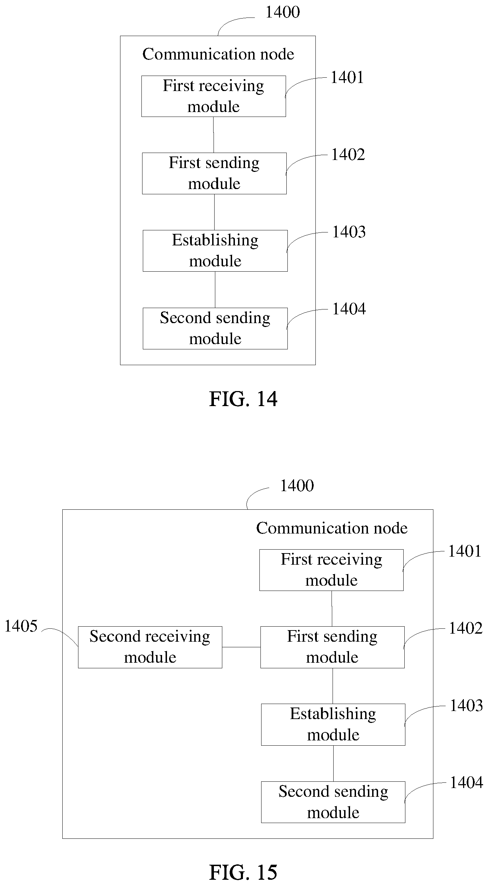

Referring to FIG. 14, FIG. 14 is a structural diagram of a communication node according to some embodiments of the present disclosure. The communication node is a target node. As shown in FIG. 14, the communication node includes:
a first receiving module 1401, configured to receive a handover request sent by a source node;
a first sending module 1402, configured to send a handover response of the handover request to the source node, where the handover response includes a handover command, and the handover command includes a first dual connectivity configuration;
an establishing module 1403, configured to establish a connection to a terminal; and
a second sending module 1404, configured to send a single connectivity configuration to the terminal.

Optionally, the handover command further includes terminal capability split information, and the establishing a connection to a terminal is performed when the source node accepts the handover command, where
if the source node rejects the handover command, the target node receives a notification message that is sent by the source node and that is used to indicate rejection of the handover command.

Optionally, as shown in FIG. 15, the communications device 1400 further includes: a second receiving module 1405, configured to receive a third confirmation message sent by the source node, where the third confirmation message includes at least one of the following:
confirmation information of the handover command; and
confirmation information of the first dual connectivity configuration.

Optionally, the single connectivity configuration is transmitted through an SRB1 or an SRB2 or an SRB3.

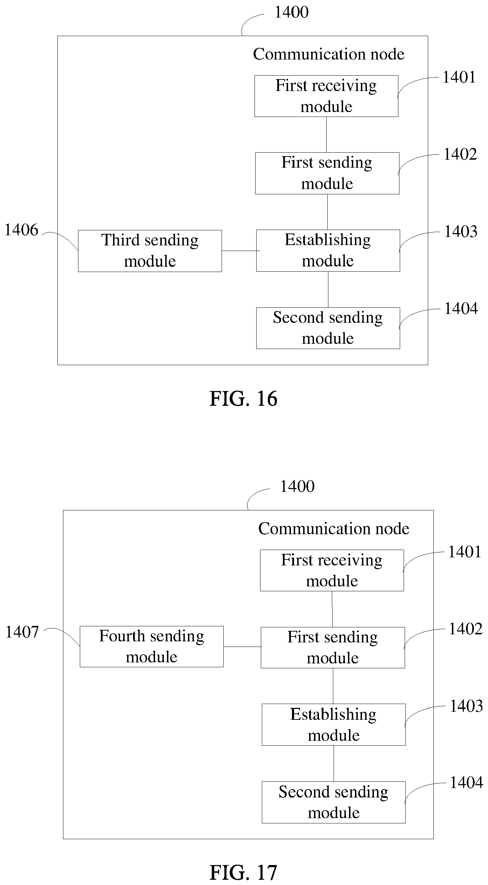

Optionally, as shown in FIG. 16, the communications device 1400 further includes:
a third sending module 1406, configured to send a second notification message to the source node, where the second notification message is used to indicate that the single connectivity configuration has taken effect or used to instruct to release a dual connectivity resource reserved by the source node.

Optionally, as shown in FIG. 17, the communications device 1400 further includes:
a fourth sending module 1407, configured to send a second dual connectivity configuration to the terminal.

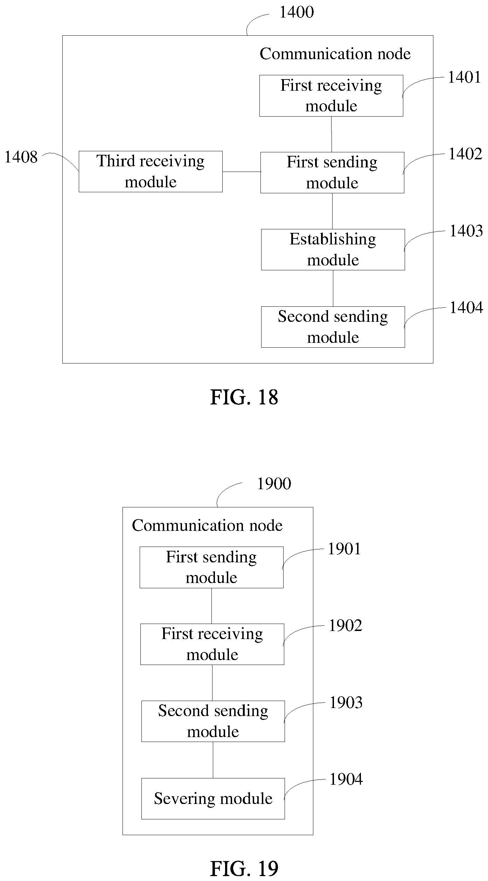

Optionally, as shown in FIG. 18, the communications device 1400 further includes:
a third receiving module 1408, configured to receive a second confirmation message sent by the terminal, where the second confirmation message includes at least one of the following:
confirmation information of the single connectivity configuration; and
confirmation information of end of a cell handover procedure.

The terminal provided in some embodiments of the present disclosure can implement the processes implemented by the target node in the method embodiment in FIG. 4. To avoid repetition, details are not described herein again. In this way, a communication delay of the terminal can be reduced.

Referring to FIG. 19, FIG. 19 is a structural diagram of another communication node according to some embodiments of the present disclosure. The communication node is a source node. As shown in FIG. 19, a communications device 1900 includes:
a first sending module 1901, configured to send a handover request to a target node;
a first receiving module 1902, configured to receive a handover response that is of the handover request and that is sent by the target node, where the handover response includes a handover command, and the handover command includes a first dual connectivity configuration;
a second sending module 1903, configured to send the handover command to a terminal; and
a severing module 1904, configured to sever a connection to the terminal, where the severing is performed after the terminal establishes the connection to the target node.

The handover command further includes terminal capability split information, and the sending the handover command to a terminal includes:
sending the handover command to the terminal if the source node accepts the handover command, where
if the handover command is rejected, the source node sends, to the target node, a notification message that is used to indicate rejection of the handover command.

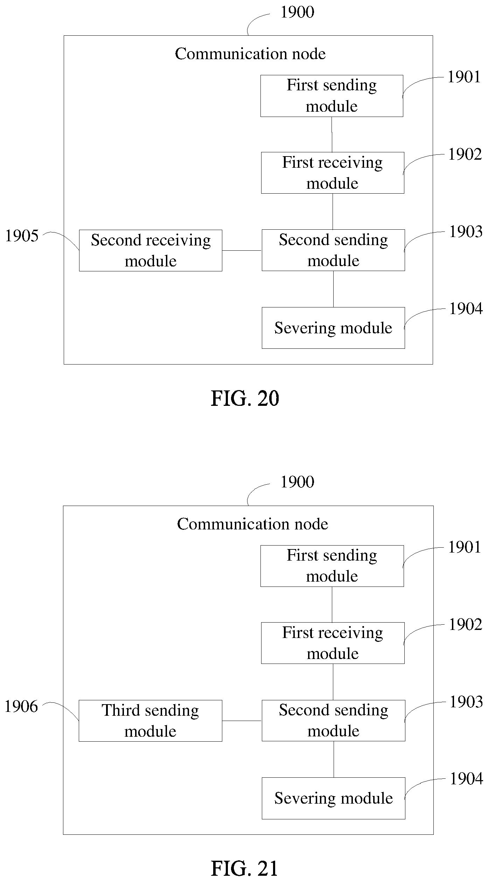

Optionally, as shown in FIG. 20, the communications device 1900 further includes:
a second receiving module 1905, configured to receive a first confirmation message sent by the terminal, where the first confirmation message includes at least one of the following:
confirmation information of the handover command; and
confirmation information of the first dual connectivity configuration.

Optionally, as shown in FIG. 21, the communications device 1900 further includes:
a third sending module 1906, configured to send a third confirmation message to the target node, where the third confirmation message includes at least one of the following:
confirmation information of the handover command; and
confirmation information of the first dual connectivity configuration.

Optionally, the handover command is transmitted through an SRB1 or an SRB2.

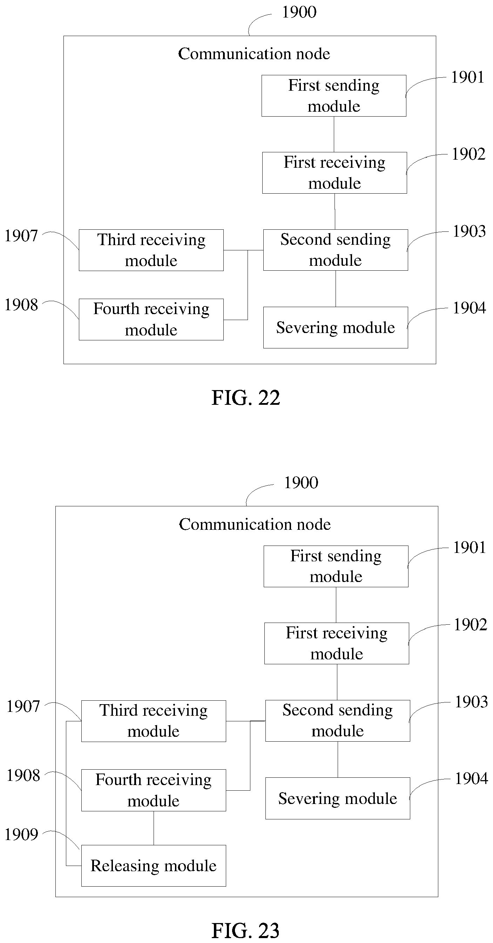

Optionally, as shown in FIG. 22, the communications device 1900 further includes:
a third receiving module 1907, configured to receive a first notification message sent by the terminal, where the first notification message is used to indicate that the first dual connectivity configuration or the single connectivity configuration has taken effect or used to instruct to release a dual connectivity resource reserved by the source node; and/or
a fourth receiving module 1908, configured to receive a second notification message sent by the target node, where the second notification message is used to indicate that the single connectivity configuration has taken effect or used to instruct to release a dual connectivity resource reserved by the source node.

Optionally, as shown in FIG. 23, the communications device 1900 further includes:
a releasing module 1909, configured to release the dual connectivity resource reserved by the source node.

The terminal provided in some embodiments of the present disclosure can implement the processes implemented by the source node in the method embodiment in FIG. 5. To avoid repetition, details are not described herein again. In this way, a communication delay of the terminal can be reduced.

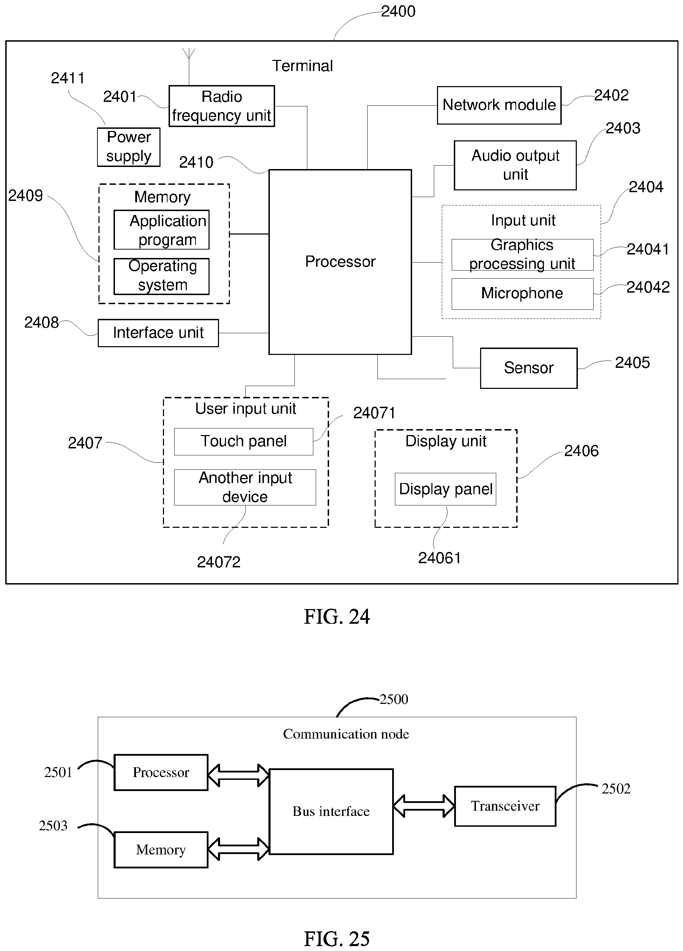

FIG. 24 is a schematic diagram of a hardware structure of a terminal according to an embodiment of this disclosure.

The terminal 2400 includes, but is not limited to: a radio frequency unit 2401, a network module 2402, an audio output unit 2403, an input unit 2404, a sensor 2405, a display unit 2406, a user input unit 2407, an interface unit 2408, a memory 2409, a processor 2410, and a power supply 2411. It can be understood by those skilled in the art that the structure of the terminal shown in FIG. 24 does not constitute a limitation on the terminal, and the terminal may include more or fewer components than those shown in the figure, or combine some components, or have different component arrangements. In some embodiments of the present disclosure, the terminal includes but is not limited to a mobile phone, a tablet computer, a notebook computer, a palmtop computer, an in-vehicle terminal, a wearable device, a pedometer, and the like.

In one embodiment, the radio frequency unit 2401 is configured to: receive a handover command sent by a source node, where the handover command includes a first dual connectivity configuration; establish a connection to a target node based on the first dual connectivity configuration; and receive a single connectivity configuration sent by the target node;
the processor 2410 is configured to apply the single connectivity configuration; and the radio frequency unit 2401 is further configured to sever a connection to the source node.

Optionally, after receiving the handover command sent by the source node, the radio frequency unit 2401 is further configured to: send a first confirmation message to the source node, where the first confirmation message includes at least one of the following:
confirmation information of the handover command; and
confirmation information of the first dual connectivity configuration.

Optionally, the handover command is transmitted through an SRB1 or an SRB2.

Optionally, the single connectivity configuration is transmitted through an SRB1 or an SRB2 or an SRB3.

Optionally, before applying the single connectivity configuration and severing the connection to the source node, the radio frequency unit 2401 is further configured to:
send a first notification message to the source node, where the first notification message is used to indicate that the first dual connectivity configuration or the single connectivity configuration has taken effect or used to instruct to release a dual connectivity resource reserved by the source node.

Optionally, after establishing the connection to the target node, the radio frequency unit 2401 is further configured to:
receive a second dual connectivity configuration sent by the target node; and
perform at least one of conversion of a bearer type, conversion of an anchor node, and conversion of a key based on the second dual connectivity configuration.

Optionally, after receiving the single connectivity configuration sent by the target node, the radio frequency unit 2401 is further configured to:
send a second confirmation message to the target node, where the second confirmation message includes at least one of the following:
confirmation information of the single connectivity configuration; and
confirmation information of end of a cell handover procedure.

Optionally, the applying the single connectivity configuration includes:
applying the single connectivity configuration by default based on a preset condition; or
applying the single connectivity configuration based on a received network instruction or reconfiguration message.

In another embodiment, the radio frequency unit 2401 is configured to: receive a handover command sent by a source node, where the handover command includes a dual connectivity configuration, and a single connectivity configuration of a target node; and establish a connection to the target node based on the dual connectivity configuration;
the processor 2410 is configured to apply the single connectivity configuration of the target node; and
the radio frequency unit 2401 is further configured to sever a connection to the source node.

Optionally, the applying a single connectivity configuration of the target node includes:
applying the single connectivity configuration of the target node if access of the target node is completed; or
applying the single connectivity configuration of the target node by default based on a preset condition; or
applying the single connectivity configuration of the target node based on a received network instruction or reconfiguration message, and reporting, to a network, an indication indicating that the single connectivity configuration of the target node takes effect.

The above terminal can reduce a communication delay of the terminal.

It should be understood that, in some embodiments of the present disclosure, the radio frequency unit 2401 may be configured to receive and send information or receive and send a signal in a call process. Specifically, after receiving downlink data from a base station, the radio frequency unit sends the downlink data to the processor 2410 for processing. In addition, the radio frequency unit sends uplink data to the base station. Usually, the radio frequency unit 2401 includes but is not limited to an antenna, at least one amplifier, a transceiver, a coupler, a low noise amplifier, a duplexer, and the like. In addition, the radio frequency unit 2401 may communicate with a network and another device through a wireless communication system.

The terminal provides a user with wireless broadband Internet access by using the network module 2402, for example, helps the user send and receive emails, browse web pages, and access streaming media.

The audio output unit 2403 may convert audio data received by the radio frequency unit 2401 or the network module 2402 or stored in the memory 2409 into an audio signal, and output the audio signal into sound. In addition, the audio output unit 2403 may further provide audio output (for example, call signal receiving sound or message receiving sound) related to a specific function performed by the terminal 2400. The audio output unit 2403 includes a loudspeaker, a buzzer, a receiver, and the like.

The input unit 2404 is configured to receive an audio signal or a video signal. The input unit 2404 may include a graphics processing unit (Graphics Processing Unit, GPU) 24041 and a microphone 24042. The graphics processing unit 24041 processes image data of a static picture or a video obtained by an image capturing apparatus (for example, a camera) in a video capturing mode or an image capturing mode. A processed image frame may be displayed on the display unit 2406. The image frame processed by the graphics processor 24041 may be stored in the memory 2409 (or another storage medium) or sent by using the radio frequency unit 2401 or the network module 2402. The microphone 24042 may receive a sound and can process such sound into audio data. The processed audio data can be converted into a format that can be sent to a mobile communications base station through the radio frequency unit 2401 in a telephone call mode, for outputting.

The terminal 2400 further includes at least one type of sensor 2405, such as a light sensor, a motion sensor, and another sensor. Specifically, the light sensor includes an ambient light sensor and a proximity sensor, where the ambient light sensor can adjust brightness of the display panel 24061 based on brightness of ambient light, and the proximity sensor can turn off the display panel 24061 and/or backlight when the terminal 2400 moves towards the ear. As a type of the motion sensor, an accelerometer sensor may detect an acceleration value in each direction (generally, three axes), and detect a value and a direction of gravity when the accelerometer sensor is static, and may be used in an application for recognizing a mobile terminal posture (such as screen switching between landscape and portrait modes, a related game, or magnetometer posture calibration), a function related to vibration recognition (such as a pedometer or a knock), and the like. The sensor 2405 may further include a fingerprint sensor, a pressure sensor, an iris sensor, a molecular sensor, a gyroscope, a barometer, a hygrometer, a thermometer, an infrared sensor, and the like. Details are not described herein.

The display unit 2406 is configured to display information entered by a user or information provided for the user. The display unit 2406 may include the display panel 24061, and the display panel 24061 may be configured in a form of a liquid crystal display (Liquid Crystal Display, LCD), an organic light-emitting diode (Organic Light-Emitting Diode, OLED), or the like.

The user input unit 2407 may be configured to receive input digit or character information, and generate key signal inputs related to user settings and function control of the terminal. Specifically, the user input unit 2407 includes a touch panel 24071 and another input device 24072. The touch panel 24071 is also referred to as a touchscreen, and may collect a touch operation performed by a user on or near the touch panel 24071 (such as an operation performed by a user on the touch panel 24071 or near the touch panel 24071 by using any proper object or accessory, such as a finger or a stylus). The touch panel 24071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 2410, and can receive and execute a command sent by the processor 2410. In addition, the touch panel 24071 may be implemented by using a plurality of types such as a resistive type, a capacitive type, an infrared ray, and a surface acoustic wave. The user input unit 2407 may include another input device 24072 in addition to the touch panel 24071. Specifically, the other input devices 24072 may include, but are not limited to, a physical keyboard, functional keys (for example, a volume control key and a switch key), a trackball, a mouse, and a joystick. Details are not described herein again.

Further, the touch panel 24071 may cover the display panel 24061. When detecting the touch operation on or near the touch panel 24071, the touch panel 24071 transmits the touch operation to the processor 2410 to determine a type of a touch event, and then the processor 2410 provides corresponding visual output on the display panel 24061 based on the type of the touch event. In FIG. 24, the touch panel 24071 and the display panel 24061 are used as two independent components to implement input and output functions of the terminal. However, in some embodiments, the touch panel 24071 and the display panel 24061 may be integrated to implement the input and output functions of the terminal. This is not specifically limited herein.

The interface unit 2408 is an interface connecting an external apparatus to the terminal 2400. For example, the external apparatus may include a wired or wireless headset jack, an external power supply (or a battery charger) port, a wired or wireless data port, a memory card port, a port for connecting an apparatus having an identification module, an audio input/output (I/O) port, a video I/O port, a headset jack, and the like. The interface unit 2408 may be configured to receive input (for example, data information and power) from an external apparatus and transmit the received input to one or more elements in the terminal 2400 or may be configured to transmit data between the terminal 2400 and an external apparatus.

The memory 2409 may be configured to store software programs and various data. The memory 2409 may mainly include a program storage area and a data storage area. The program storage area may store an operating system, an application program required by at least one function (such as a sound play function or an image play function), and the like. The data storage area may store data (such as audio data or an address book) created based on use of the mobile phone, and the like. In addition, the memory 2409 may include a high-speed random access memory, and may further include a non-volatile memory, for example, at least one magnetic disk storage device, a flash memory device, or another volatile solid-state storage device.

The processor 2410 is a control center of the terminal, and connects all parts of the entire terminal by using various interfaces and lines. By running or executing a software program and/or a module stored in the memory 2409 and invoking data stored in the memory 2409, the processor 2410 performs various functions of the terminal and data processing, to perform overall monitoring on the terminal. The processor 2410 may include one or more processing units. Optionally, the processor 2410 may be integrated with an application processor and a modem processor. The application processor mainly processes an operating system, a user interface, an application program, and the like, and the modem processor mainly processes wireless communication. It may be understood that the modem processor may not be integrated into the processor 2410.

The terminal 2400 may further include the power supply 2411 (such as a battery) that supplies power to each component. Optionally, the power supply 2411 may be logically connected to the processor 2410 by using a power management system, so as to implement functions such as charging, discharging, and power consumption management by using the power management system.

In addition, the terminal 2400 includes some functional modules not shown. Details are not described herein.

Optionally, some embodiments of the present disclosure further provide a terminal, including a processor 2410, a memory 2409, and a computer program that is stored in the memory 2409 and executable on the processor 2410. When the processor 2410 executes the computer program, the foregoing processes of the cell handover method embodiment are implemented and a same technical effect can be achieved. To avoid repetition, details are not described herein again.

Referring to FIG. 25, FIG. 25 is a structural diagram of another communication node according to some embodiments of the present disclosure. The communication node is a target node. As shown in FIG. 25, a communication node 2500 includes a processor 2501, a transceiver 2502, a memory 2503, and a bus interface.

The transceiver 2502 is configured to: receive a handover request sent by a source node; send a handover response of the handover request to the source node, where the handover response includes a handover command, and the handover command includes a first dual connectivity configuration; establish a connection to a terminal; and send a single connectivity configuration to the terminal.

Optionally, the handover command further includes terminal capability split information, and the establishing a connection to a terminal is performed when the source node accepts the handover command, where
if the source node rejects the handover command, the target node receives a notification message that is sent by the source node and that is used to indicate rejection of the handover command.

Optionally, after sending the handover response of the handover request to the source node, the transceiver 2502 is further configured to: receive a third confirmation message sent by the source node, where the third confirmation message includes at least one of the following:
confirmation information of the handover command; and
confirmation information of the first dual connectivity configuration.

Optionally, the single connectivity configuration is transmitted through an SRB1 or an SRB2 or an SRB3.

Optionally, after sending the single connectivity configuration to the terminal or after an indication indicating that the single connectivity configuration of the terminal takes effect, the transceiver 2502 is further configured to:
send a second notification message to the source node, where the second notification message is used to indicate that the single connectivity configuration has taken effect or used to instruct to release a dual connectivity resource reserved by the source node.

Optionally, after establishing the connection to the terminal, the transceiver 2502 is further configured to:
send a second dual connectivity configuration to the terminal.

Optionally, after sending the single connectivity configuration to the terminal, the transceiver 2502 is further configured to:
receive a second confirmation message sent by the terminal, where the second confirmation message includes at least one of the following:
confirmation information of the single connectivity configuration; and
confirmation information of end of a cell handover procedure.

The above target node can reduce a communication delay of the terminal.

The transceiver 2502 is configured to receive and send data under the control of the processor 2501. The transceiver 2502 includes at least two antenna ports.

In FIG. 25, a bus architecture may include any quantity of interconnected buses and bridges. Specifically, various circuits of one or more processors represented by the processor 2501 and a memory represented by the memory 2503 are interconnected. The bus architecture may further link various other circuits such as a peripheral device, a voltage regulator, and a power management circuit. These are well known in the art, and therefore are not further described in this specification. The bus interface provides an interface. The transceiver 2502 may be a plurality of components. To be specific, the transceiver 2502 includes a transmitter and a receiver, and provides a unit configured to communicate with various other apparatuses on a transmission medium. For different user equipment, a user interface 2504 may be an interface that can externally or internally connect to a needed device, and the connected device includes but is not limited to a keypad, a display, a loudspeaker, a microphone, and a joystick.

The processor 2501 is responsible for bus architecture management and general processing. The memory 2503 may store data used by the processor 2501 when the processor 2501 performs an operation.

Optionally, some embodiments of the present disclosure further provide a network device, including a processor 2501, a memory 2503, and a computer program that is stored in the memory 2503 and executable on the processor 2501. When the processor 2501 executes the computer program, the foregoing processes of the cell handover method embodiment are implemented and a same technical effect can be achieved. To avoid repetition, details are not described herein again.

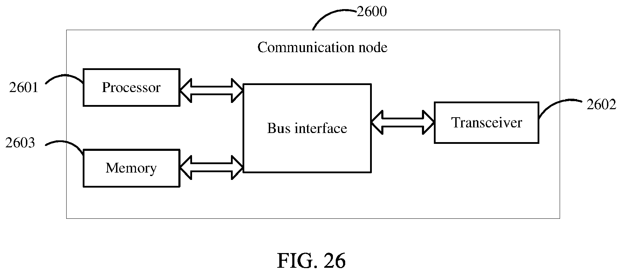

Referring to FIG. 26, FIG. 26 is a structural diagram of another communication node according to some embodiments of the present disclosure. The communication node is a source node. As shown in FIG. 26, a communication node 2600 includes a processor 2601, a transceiver 2602, a memory 2603, and a bus interface.

The transceiver 2602 is configured to: send a handover request to a target node; receive a handover response that is of the handover request and that is sent by the target node, where the handover response includes a handover command, and the handover command includes a first dual connectivity configuration; send the handover command to a terminal; and sever a connection to the terminal, where the severing is performed after the terminal establishes the connection to the target node.

Optionally, the handover command further includes terminal capability split information, and the sending the handover command to a terminal includes:
sending the handover command to the terminal if the source node accepts the handover command, where
if the handover command is rejected, the source node sends, to the target node, a notification message that is used to indicate rejection of the handover command.

Optionally, after a configuration message is sent to the terminal, the transceiver 2602 is further configured to:
receive a first confirmation message sent by the terminal, where the first confirmation message includes at least one of the following:
confirmation information of the handover command; and
confirmation information of the first dual connectivity configuration.

Optionally, after receiving the first confirmation message sent by the terminal, the transceiver 2602 is further configured to:
send a third confirmation message to the target node, where the third confirmation message includes at least one of the following:
confirmation information of the handover command; and
confirmation information of the first dual connectivity configuration.

Optionally, the handover command is transmitted through an SRB1 or an SRB2.

Optionally, after a configuration message is sent to the terminal, the transceiver 2602 is further configured to:
receive a first notification message sent by the terminal, where the first notification message is used to indicate that the first dual connectivity configuration or the single connectivity configuration has taken effect or used to instruct to release a dual connectivity resource reserved by the source node; and/or
receive a second notification message sent by the target node, where the second notification message is used to indicate that the single connectivity configuration has taken effect or used to instruct to release a dual connectivity resource reserved by the source node.

Optionally, after the first notification message and/or the second notification message are/is received, the processor 2501 is further configured to:
release the dual connectivity resource reserved by the source node.

The above source node can reduce a communication delay of the terminal.

The transceiver 2602 is configured to receive and send data under the control of the processor 2601. The transceiver 2602 includes at least two antenna ports.

In FIG. 26, a bus architecture may include any quantity of interconnected buses and bridges. Specifically, various circuits of one or more processors represented by the processor 2601 and a memory represented by the memory 2603 are interconnected. The bus architecture may further link various other circuits such as a peripheral device, a voltage regulator, and a power management circuit. These are well known in the art, and therefore are not further described in this specification. The bus interface provides an interface. The transceiver 2602 may be a plurality of components. To be specific, the transceiver 2602 includes a transmitter and a receiver, and provides a unit configured to communicate with various other apparatuses on a transmission medium. For different user equipment, a user interface 2604 may be an interface that can externally or internally connect to a needed device, and the connected device includes but is not limited to a keypad, a display, a loudspeaker, a microphone, and a joystick.

The processor 2601 is responsible for management of a bus architecture and general processing. The memory 2603 may store data used when the processor 2601 performs an operation.

Optionally, some embodiments of the present disclosure further provide a network device, including a processor 2601, a memory 2603, and a computer program that is stored in the memory 2603 and executable on the processor 2601. When the processor 2601 executes the computer program, the foregoing processes of the cell handover method embodiment are implemented and a same technical effect can be achieved. To avoid repetition, details are not described herein again.

Some embodiments of the present disclosure further provide a computer-readable storage medium, where the computer-readable storage medium stores a computer program, and when a processor executes the computer program, the processes of the cell handover method embodiment on the terminal side provided in some embodiments of the present disclosure are implemented, or when a processor executes the computer program, steps of the cell handover method embodiment on the target node side provided in some embodiments of the present disclosure are implemented, or when a processor executes the computer program, steps of the cell handover method embodiment on the source node side provided in some embodiments of the present disclosure are implemented. A same technical effect can be achieved. To avoid repetition, details are not described herein again. The computer-readable storage medium includes a read-only memory (Read-only Memory, ROM), a random access memory (Random Access Memory, RAM), a magnetic disk, or an optical disc.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element.

According to the foregoing descriptions of the implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of the present disclosure essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present disclosure.

The embodiments of the present disclosure are described above with reference to the accompanying drawings, but the present disclosure is not limited to the above specific implementations, and the above specific implementations are only illustrative and not restrictive. Under the enlightenment of the present disclosure, those of ordinary skill in the art can make many forms without departing from the purpose of the present disclosure and the protection scope of the claims, all of which fall within the protection of the present disclosure.

## Claims

1. A cell handover method, applied to a terminal and comprising:
receiving a handover command sent by a source node, wherein the handover command comprises a first dual connectivity configuration;
establishing a connection to a target node based on the first dual connectivity configuration;
receiving a single connectivity configuration sent by the target node;
applying the single connectivity configuration; and
severing a connection to the source node.

2. The method according to claim 1, wherein after the receiving a handover command sent by a source node, the method further comprises:
sending a first confirmation message to the source node, wherein the first confirmation message comprises at least one of the following:
confirmation information of the handover command; and
confirmation information of the first dual connectivity configuration.

3. The method according to claim 1, wherein the handover command is transmitted through a signaling radio bearer SRB1 or an SRB2.

4. The method according to claim 1, wherein the single connectivity configuration is transmitted through an SRB1 or an SRB2 or an SRB3.

5. The method according to any one of claims 1 to 4, wherein before the applying the single connectivity configuration and severing a connection to the source node, the method further comprises:
sending a first notification message to the source node, wherein the first notification message is used to indicate that the first dual connectivity configuration or the single connectivity configuration has taken effect or used to instruct to release a dual connectivity resource reserved by the source node.

6. The method according to any one of claims 1 to 4, wherein after the establishing a connection to a target node, the method further comprises:
receiving a second dual connectivity configuration sent by the target node; and
performing at least one of conversion of a bearer type, conversion of an anchor node, and conversion of a key based on the second dual connectivity configuration.

7. The method according to any one of claims 1 to 4, wherein after the receiving a single connectivity configuration sent by the target node, the method further comprises:
sending a second confirmation message to the target node, wherein the second confirmation message comprises at least one of the following:
confirmation information of the single connectivity configuration; and confirmation information of end of a cell handover procedure.

8. The method according to any one of claims 1 to 4, wherein the applying the single connectivity configuration comprises:
applying the single connectivity configuration by default based on a preset condition; or
applying the single connectivity configuration based on a received network instruction or reconfiguration message.

9. A cell handover method, applied to a terminal and comprising:
receiving a handover command sent by a source node, wherein the handover command comprises a dual connectivity configuration, and a single connectivity configuration of a target node;
establishing a connection to the target node based on the dual connectivity configuration;
applying the single connectivity configuration of the target node; and
severing a connection to the source node.

10. The method according to claim 9, wherein the applying a single connectivity configuration of the target node comprises:
applying the single connectivity configuration of the target node if access of the target node is completed; or
applying the single connectivity configuration of the target node by default based on a preset condition; or
applying the single connectivity configuration of the target node based on a received network instruction or reconfiguration message, and reporting, to a network, an indication indicating that the single connectivity configuration of the target node takes effect.

11. A cell handover method, applied to a target node and comprising:
receiving a handover request sent by a source node;
sending a handover response of the handover request to the source node, wherein the handover response comprises a handover command, and the handover command comprises a first dual connectivity configuration;
establishing a connection to a terminal; and
sending a single connectivity configuration to the terminal.

12. The method according to claim 11, wherein the handover command further comprises terminal capability split information, and the establishing a connection to a terminal is performed when the source node accepts the handover command, wherein
if the source node rejects the handover command, the target node receives a notification message that is sent by the source node and that is used to indicate rejection of the handover command.

13. The method according to claim 11, wherein after the sending a handover response of the handover request to the source node, the method further comprises:
receiving a third confirmation message sent by the source node, wherein the third confirmation message comprises at least one of the following:
confirmation information of the handover command; and
confirmation information of the first dual connectivity configuration.

14. The method according to claim 11, wherein the single connectivity configuration is transmitted through an SRB1 or an SRB2 or an SRB3.

15. The method according to any one of claims 11 to 14, wherein after the sending a single connectivity configuration to the terminal or after an indication indicating that the single connectivity configuration of the terminal takes effect, the method further comprises:
sending a second notification message to the source node, wherein the second notification message is used to indicate that the single connectivity configuration has taken effect or used to instruct to release a dual connectivity resource reserved by the source node.

16. The method according to any one of claims 11 to 14, wherein after the establishing a connection to a terminal, the method further comprises:
sending a second dual connectivity configuration to the terminal.

17. The method according to any one of claims 11 to 14, wherein after the sending a single connectivity configuration to the terminal, the method further comprises:
receiving a second confirmation message sent by the terminal, wherein the second confirmation message comprises at least one of the following:
confirmation information of the single connectivity configuration; and
confirmation information of end of a cell handover procedure.

18. A cell handover method, applied to a source node and comprising:
sending a handover request to a target node;
receiving a handover response that is of the handover request and that is sent by the target node, wherein the handover response comprises a handover command, and the handover command comprises a first dual connectivity configuration;
sending the handover command to a terminal; and
severing a connection to the terminal, wherein the severing is performed after the terminal establishes the connection to the target node.

19. The method according to claim 18, wherein the handover command further comprises terminal capability split information, and the sending the handover command to a terminal comprises:
sending the handover command to the terminal if the source node accepts the handover command, wherein
if the handover command is rejected, the source node sends, to the target node, a notification message that is used to indicate rejection of the handover command.

20. The method according to claim 18, wherein after a configuration message is sent to the terminal, the method further comprises:
receiving a first confirmation message sent by the terminal, wherein the first confirmation message comprises at least one of the following:
confirmation information of the handover command; and
confirmation information of the first dual connectivity configuration.

21. The method according to claim 20, wherein after the receiving a first confirmation message sent by the terminal, the method further comprises:
sending a third confirmation message to the target node, wherein the third confirmation message comprises at least one of the following:
confirmation information of the handover command; and
confirmation information of the first dual connectivity configuration.

22. The method according to claim 18, wherein the handover command is transmitted through an SRB1 or an SRB2.

23. The method according to any one of claims 18 to 22, wherein after a configuration message is sent to the terminal, the method further comprises:
receiving a first notification message sent by the terminal, wherein the first notification message is used to indicate that the first dual connectivity configuration or the single connectivity configuration has taken effect or used to instruct to release a dual connectivity resource reserved by the source node; and/or
receiving a second notification message sent by the target node, wherein the second notification message is used to indicate that the single connectivity configuration has taken effect or used to instruct to release a dual connectivity resource reserved by the source node.

24. The method according to claim 23, wherein after the first notification message and/or the second notification message are/is received, the method further comprises:
releasing the dual connectivity resource reserved by the source node.

25. A terminal, comprising:
a first receiving module, configured to receive a handover command sent by a source node, wherein the handover command comprises a first dual connectivity configuration;
an establishing module, configured to establish a connection to a target node based on the first dual connectivity configuration;
a second receiving module, configured to receive a single connectivity configuration sent by the target node;
an applying module, configured to apply the single connectivity configuration; and
a severing module, configured to sever a connection to the source node.

26. A terminal, comprising:
a receiving module, configured to receive a handover command sent by a source node, wherein the handover command comprises a dual connectivity configuration, and a single connectivity configuration of a target node;
an establishing module, configured to establish a connection to the target node based on the dual connectivity configuration;
an applying module, configured to apply the single connectivity configuration of the target node; and
a severing module, configured to sever a connection to the source node.

27. A communication node, wherein the communication node is a target node and comprises:
a first receiving module, configured to receive a handover request sent by a source node;
a first sending module, configured to send a handover response of the handover request to the source node, wherein the handover response comprises a handover command, and the handover command comprises a first dual connectivity configuration;
an establishing module, configured to establish a connection to a terminal; and
a second sending module, configured to send a single connectivity configuration to the terminal.

28. A communication node, wherein the communication node is a source node and comprises:
a first sending module, configured to send a handover request to a target node;
a first receiving module, configured to receive a handover response that is of the handover request and that is sent by the target node, wherein the handover response comprises a handover command, and the handover command comprises a first dual connectivity configuration;
a second sending module, configured to send the handover command to a terminal; and
a severing module, configured to sever a connection to the terminal, wherein the severing is performed after the terminal establishes the connection to the target node.

29. A terminal, comprising a memory, a processor, and a program that is stored in the memory and executable on the processor, wherein when the processor executes the program, steps of the cell handover method according to any one of claims 1 to 8 are implemented.

30. A terminal, comprising a memory, a processor, and a program that is stored in the memory and executable on the processor, wherein when the processor executes the program, steps of the cell handover method according to either claim 9 or claim 10 are implemented.

31. A communication node, wherein the communication node is a target node and comprises a memory, a processor, and a program that is stored in the memory and executable on the processor, wherein when the processor executes the program, steps of the cell handover method according to any one of claims 11 to 17 are implemented.

32. A communication node, wherein the communication node is a source node and comprises a memory, a processor, and a program that is stored in the memory and executable on the processor, wherein when the processor executes the program, steps of the cell handover method according to any one of claims 18 to 24 are implemented.

33. A computer-readable storage medium, wherein the computer-readable storage medium stores a computer program, and when a processor executes the computer program, steps of the cell handover method according to any one of claims 1 to 8 are implemented, or when a processor executes the computer program, steps of the cell handover method according to either claim 9 or claim 10 are implemented, or when a processor executes the computer program, steps of the cell handover method according to any one of claims 11 to 17 are implemented, or when a processor executes the computer program, steps of the cell handover method according to any one of claims 18 to 24 are implemented.
